Europäisches Patentamt

European Patent Office

Office européen des brevets

(11) Publication number: **0 193 913**
**B1**

(12) **EUROPEAN PATENT SPECIFICATION**

(45) Date of publication of patent specification: **27.06.90**

(21) Application number: **86102746.4**

(22) Date of filing: **03.03.86**

(51) Int. Cl.⁵: **B 60 C 7/10, B 29 D 30/04, B 60 C 5/00**

(54) Syntactic foam tyre inserts for flat-proof tyres and apparatus for manufacturing a portion thereof.

(30) Priority: **08.03.85 US 709504**
**27.01.86 US 822326**

(43) Date of publication of application:
**10.09.86 Bulletin 86/37**

(45) Publication of the grant of the patent:
**27.06.90 Bulletin 90/26**

(84) Designated Contracting States:
**AT BE CH DE FR GB IT LI LU NL SE**

(56) References cited:
**DE-A-2 649 057**

(73) Proprietor: **Shoner, Douglas**
**12244 Truro Avenue**
**Hawthorne California 90250 (US)**

(72) Inventor: **Shoner, Douglas**
**12244 Truro Avenue**
**Hawthorne California 90250 (US)**

(74) Representative: **Howden, Christopher Andrew**
**FORRESTER & BOEHMERT Widenmayerstrasse 4/I**
**D-8000 München 22 (DE)**

Courier Press, Leamington Spa, England.

## Description

This invention relates to tyres for vehicle wheels.

The need for a flat-proof tyre has been evident ever since the invention of the automobile. Many such tyres have been proposed, but for one reason or another, they have not been completely successful, and tyres today are subject to flats just as they were when the automobile was first developed.

One proposed "flat free" tyre was made by filling a tyre casing with a conventional plastic foam, the foam replacing the conventional air-filled inner tube. Foam-filled tyres, however, proved to be too heavy for passenger car use and did not provide a comfortable ride. Foam-filled tyres also produced a relatively high build-up of heat when operated at high speeds over long distances. Heat proved to be deleterious to the tyre and to the foam. As a result, foam-filled tyres are generally restricted to military use, mining vehicles, or public works equipment where the aforesaid problems can be tolerated.

DE—A—2649057 discloses a safety tyre in which the tyre cover is packed with air filled rubber balls, or foam rubber balls, and the tyre then pumped up to fill the interstices between the ball with compressed air. However, whilst this arrangement may prevent the sudden (and dangerous) "blow-out" of a tyre, there is still, in the event of a puncture, a substantial loss of pressure so that even if the vehicle is not immediately immobilised, the handling of the vehicle is significantly affected so that it is necessary to proceed further with cation and at a reduced speed, and to have the tyre repaired or replaced as soon as possible.

It is an object of the present invention to provide an improved safety tyre in which a single puncture will not cause the tyre to go flat or deflate significantly.

It is another object of the present invention to produce a foamed plastic tyre insert that will be free of the problems associated with prior foam-filled tyres.

Yet another object is to provide an apparatus for manufacturing a component of the foamed tyre insert of the present invention.

A still further object of the invention is to provide a process for the construction of foam tyre insert.

According to one aspect of the invention, there is provided a cellular tyre insert comprising:

(a) a multiplicity of preformed, hollow, flexible, cells;

(b) said preformed, hollow, flexible, cells further comprising a gas within the cell under a pressure above that of atmospheric;

(c) said multiplicity of preformed, hollow, flexible, pressurised, cells being compressed together to condense the initial volume of said cells so that at least some of said cells become deformed and portions of some of the cells are pushed into the void space between adjacent cells to thereby substantially reduce the void space between cells;

(d) said multiplicity of cells being bonded together in said compressed together state while in a mould to create a cellular structure conformal to the shape of the interior surface of a pneumatic tyre;

(e) said cellular structure having no substantial mass between cells; and

(f) upon completion of said bonding and the subsequent removal of said cellular structure from said mould, and thus said cellular structure no longer being constrained, said cellular structure remains in said compressed together state and approximately in said desired shape.

According to another aspect of the invention, there is provided a relatively flat-proof tyre comprising a tyre casing and one or more tyre inserts according to the invention.

According to a further aspect of the invention, there is provided an apparatus for moulding elastomeric spheres from a resin or plastic by simultaneously rotating a mould for said sphere about two perpendicular axes of said sphere, said apparatus comprising:

a bracket rotatably mounted within a frame, said bracket being rotatable about the axis of a pair of shafts passing through said frame and connected to said bracket;

a sphere mould rotatably mounted to said bracket for rotation about an axis of said mould, said mould axis being perpendicular to the axis of said bracket shafts; and

power transmission means to simultaneously rotate said bracket and mould as aforesaid, when either said bracket or said mould is rotated.

According to a yet further aspect of the invention, there is provided a process for the construction of a syntactic foam tyre insert or a sgement thereof, by first producing seamless, one-piece, flexible, hollow, pressurised cells, in the form of spheres, said process comprising:

(a) charging a spherical mould cavity with a desired quantity of a castable resin that will be flexible when curved;

(b) sealing said mould cavity;

(c) pressurizing said mould cavity to a desired pressure with a desired gas;

(d) rotating said mould about two perpendicular axes simultaneously to cause said castable resin within said mould cavity to coat the entire surface of said spherical mould cavity;

(e) upon said curing of the resin, opening said mould and removing the cell, and

(f) subsequently placing a multiplicity of said cells in a tyre insert mould;

(g) this volume of cells being then compressed into the tyre insert mould to substantially eliminate the void spaces between the cells;

(h) the cells being then bonded together in this compressed state, forming a unitary mass; and

(i) the tyre insert mould being then opened to release the formed syntactic foam tyre insert.

A preferred form of flat-proof tyre embodying the present invention comprises a conventional tyre casing and one or more tyre inserts comprised of preformed elastomeric shapes in the form of spheres compressed and moulded together into the configuration of the interior of the tyre casing or a segment thereof. The elastomeric spheres are hollow and are cast in a pressurised mould cavity from a castable plastic resin to produce a pressurised elastomeric sphere. These elastomeric spheres are coated with a liquid resin and compressed in a mould to form the tyre insert. The liquid resin coating will fill any void spaces between the spheres compressed, and will bond the spheres together when the liquid resin is cured. The resultant mass is referred to as a flexible, pressurized closed cell, "syntactic" foam.

The pressurised elastomeric spheres are preferably manufactured in an apparatus which simultaneously rotates the mould for the sphere about two separate axes which are perpendicular to each other. The apparatus comprises a bracket rotatably mounted within a frame having a pair of horizontal shafts passing through the frame and connected to the bracket. The frame is rotatable about the axis of the shafts. A sphere mould is mounted on the bracket and is rotatable about the vertical axis of the mould which is perpendicular to the horizontal axis of the said shafts. A power transmission means is associated with the bracket and frame to simultaneously rotate the sphere mould about said horizontal and vertical axes to ensure a uniform distribution of the resin within the mould cavity and thereby produce a sphere having a uniform wall thickness when the resin is cured.

Embodiments of the invention are described below, by way of example, with reference to the accompanying drawing, in which:—

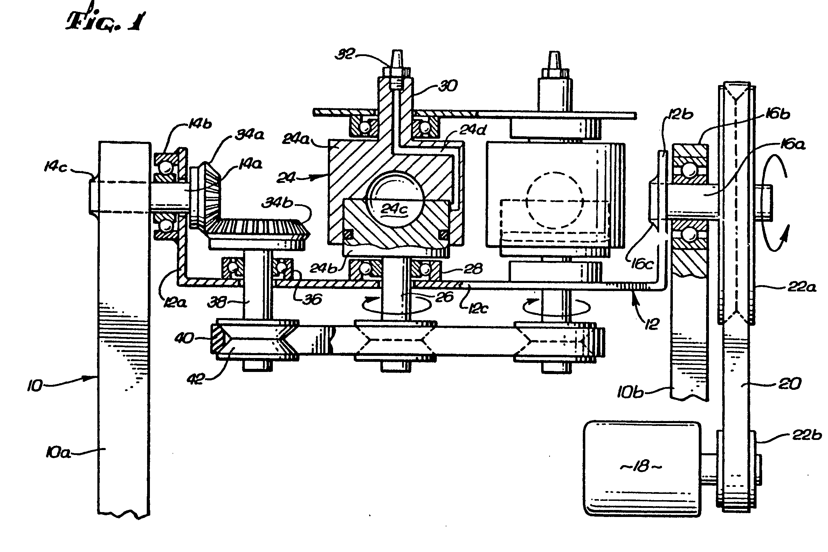

Figure 1 is a front elevational view of the apparatus of the present invention.

Preferred embodiments of the invention make use of pre-formed hollow elastomeric spheres. These hollow elastomeric spheres of the present invention may be made by any moulding or casting technique known in the art which will produce a unitary, hollow sphere, having relatively thin walls ranging from about 0.01 inch to about 0.025 inch, and weighing about 0.8 to about 6 grams.

A moulding or casting technique which may be used to produce such spheres is to charge a spherical mould cavity with the desired quantity of castable liquid resin, and then increase gas pressure within the mould. The mould is simultaneously rotated about its opposing axes to produce a hollow seamless sphere having a uniform wall thickness as the resin is cured within the mould.

An apparatus for simultaneously rotating a sphere mould about opposing axes thereof is shown in Figure 1. A frame 10 is provided having a first upstanding leg 10a and a second upstanding leg 10b. A rotatable U-shaped bracket 12 is provided between the upstanding frame legs 10a and b. The U-shaped bracket has a first leg 12a parallel to and spaced away from the first upstanding frame leg 10a, a second leg 12b parallel to and spaced away from the second upstanding frame leg 10b, and a horizontal leg 12c connecting said first and second bracket legs.

A first shaft 14a passes through the first legs of the frame and bracket, and a second shaft 16a passes through the second legs of the frame and bracket. The shafts are fixed to the bracket legs by means of bolt heads 14c and 16c welded thereon, and are rotational within the frame legs by means of bearings 14b and 16b adjacent to or within said frame legs, to permit the bracket 12 to be rotatable about the horizontal axis of the shafts 14a and 16a.

Power to rotate shaft 16a and bracket 12, is provided by motor 18, in association with a V-belt 20 and V-belt pulleys 22a and 22b.

A sphere mould 24 is rotatably attached to the horizontal bracket leg 12c and has a downwardly projecting shaft 26 which passes through mould bearing 28 and through horizontal leg 12c.

The sphere mould 24 has a female end 24a, a cylindrical male end 24b, and a mould cavity 24c which forms a sphere when the female end and male end are mated. A passageway 24d is provided in the female end of the mould for communication with an external source of pressurised gas and with the tolerance between the male and female ends when mated. An O-ring is provided around the circumference of the male end to prevent the pressurised gas from escaping out along the circumference thereof when mated with the female end.

The top of the female end of the mould is provided with a shaft 30 and a gas valve 32 of the type used on automobile inner tube tyres to allow pressurised gas to be injected into the mould without the release of gas out of the valve when the source of pressure is removed.

A power transmission means is provided for transmitting the power to rotate bracket 12 about the horizontal axis of shafts 14a and 16a, and to rotate the sphere mould about the vertical axis thereof. The power transmission means is in the form of a stationary miter gear 34a mounted onto stationary shaft 14a, and engaged with a rotatable miter gear 34b rotatably mounted on said horizontal bracket leg 12c by bearing 36. The rotatable miter gear has a shaft 38 downwardly extending therefrom for engagement with a V-belt pulley 42 and V-belt 40 which are engaged with the mould shaft 26, connected to the male end of said mould, to provide a source of energy for rotating the mould about its vertical axis.

In operation, the mould is opened and a predetermined amount of castable plastic resin is placed in the semi-spherical mould cavity in the male end of the mould. The moulds are then closed and pressurised. Motor 18 is actuated to rotate shaft 16a by means of V-belt 20 and V-belt pulleys 22. The rotational energy on shaft 16a causes bracket 12 to rotate about the horizontal axis of shaft 14a and 16a. When this rotation commences, the rotatable miter gear 34b rotates around the stationary miter gear 34a, which causes miter gear shaft 38 to rotate causing V-belt pulley 42 and V-belt 40 to rotate causing mould shaft 26 to rotate causing mould 24 to rotate about the vertical axis of said mould.

As a result, the sphere mould will be rotated simultaneously about its horizontal and vertical axes to cause the liquid castable resin within the mould cavity to be evenly distributed about the walls of the mould cavity so that upon curing, the moulded elastomeric spheres will be seamless and have a uniform wall thickness. The seamless feature of the spheres will eliminate any possible problem of the pressure within the spheres from leaking through a seam.

Alternatively, the rotational power of motor 18 may be applied to miter gear shaft 38 rather than to horizontal shaft 16a.

Figure 1 illustrates a second sphere mould 44 in parallel with mould 24. The second sphere mould 44 is identical in construction and operation to sphere mould 24. Additional sphere moulds may be provided along the length of horizontal bracket leg 12c to increase the production of spheres. When more than one mould is utilised, a top mould bracket 46 and bearings 48 and 50 are provided to stabilise the moulds and to provide for their rotation.

The pressure within the spherical mould is provided by pressurised gas, such as air or nitrogen which will not react with and degrade the resin from which the spheres are manufactured. The spheres may be coated or impregnated with a gas barrier, such as polyvinyl alcohol, butyl rubber, or polyisobutylene to prevent any gas migration out of the spheres. Polyurethane is the preferred resin and nitrogen is the preferred gas used for pressurising the spheres because of its low rate of migration through polyurethane. Any other resin, gas or gas barrier suitable for use with the present invention and determined by routine experimentation, may also be used.

The diameter of the spheres ranges from about $\frac{1}{2}$ inch to about 2 inches when used for automobile tyres, but may be smaller or greater, depending upon the size of the tyre and the use to which it is put.

When the elastomeric spheres are ready to be moulded into a tyre insert embodying the present invention, they are coated with a liquid resin which is preferably of the same composition used to manufacture the elastomeric spheres, for example polyurethane. The coated spheres are compressed in a mould corresponding to the configuration of the interior of a tyre casing or a segment of such casing.

The spheres occupy about 50% of the volume of the tyre insert mould, the remainder of the mould being occupied by voids between the spheres. The spheres are compressed to about 50% of the mould volume to substantially reduce the weight of the inserts by eliminating the voids without substantially increasing the pressure in the interior of the spheres. The coating liquid resin on the spheres will fill any remaining void space not filled by compression to form a unitary syntactic foam when the liquid resin is cured.

The strength of the elastomeric spheres may be increased by admixing therewith, suitable amounts of glass, quartz, aramid, or carbon fibres, or mixtures thereof. Such fibres may also be admixed with the liquid plastic resin used to coat the elastomeric shapes to provide additional strength. Such fibres should be utilised in amounts, lengths and diameters that will not detract from the elastomeric nature of the tyre insert.

Thus, a relatively flat-proof tyre may comprise a tyre casing having a tyre tread and side walls and an insert embodying the invention bonded to the interior of the casing over the tread and sidewall regions, of simply located within the tyre casing so as to extend over these regions.

While the present invention has been described in terms of a tyre insert designed to be inserted into the interior of a tyre casing, tyre tread and sidewalls and suitable reinforcements therefor may be bonded directly onto the insert to form the flat-proof tyre.

A tyre embodying the present invention may be mounted onto a one piece drop centre rim or a two piece wheel which will separate into two halves along a plane perpendicular to the rotational axis of the wheel. These two halves are installed in the open centre of the tyre, drawn together, and secured around their circumference by fastening means to form the wheel.

When a tyre in accordance with the preferred embodiment of the present invention is punctured by a nail or some other foreign object, a few elastomeric spheres will collapse, but the loss of pressure in these few spheres is insignificant in view of the great number of spheres comprising each tyre insert. As a result, the tyre will not go flat but can continue to be used despite the presence of the object causing the puncture.

An insert in accordance with the preferred embodiment, when designed for use with a conventional automobile tyre, will weigh about 8 pounds when completely filling the tyre. A conventional automobile tyre weighs about 25 pounds and the metallic wheel walls will weigh about 10 pounds. This yields a total weight of about 43 pounds which is below a 50 pound limit on the tyre and wheel combination to avoid the problems associated with prior foamed tyres and to make such tyres acceptable for conventional automobile use.

The weight of tyres embodying the present invention may be reduced even further by using spheres of differing diameter to manufacture said inserts, by using a conventional inner tube of reduced diameter in association with the inserts, or by using tubeless tyres in association with said inserts.

When using spheres of differing diameters to manufacture said insert, spheres of smaller diameter are arranged in the inserts so they will be closer to the tyre tread than the larger spheres, when the insert is inserted into the tyre casing.

The larger spheres will thus be further away from the tyre treads and will be closer to the centre of the wheel than the smaller spheres. By this arrangement the overall weight of the insert can be reduced because the larger spheres weigh less than smaller spheres having the same volume. The depth of the layer of the smaller diameter spheres is selected so that when the tyre of the present invention is punctured by a nail or some other foreign object the depth of the puncture will not reach the larger diameter spheres, but will be limited to the smaller diameter spheres. In this manner, the amount of deflation due to the puncture will be relatively minor because it will be limited to the spheres of small diameter.

Rather than using spheres of larger diameter to reduce tyre weight, a conventional automobile inner tube of reduced diameter may be substituted therefor. When using a conventional inner tube said tyre insert is manufactured so that it may be used as a liner between the tyre casing and the inner tube adjacent to the tyre tread and sidewalls. In this case, the tyre insert may be bonded to the interior of the tyre casing, or simply held in place against the interior surface of the tyre casing by the pressure within the inner tube. The depth of such a liner is selected so that when the tyre is punctured by a nail or some other foreign object, the puncture will not reach the inner tube, but will be limited to a few small spheres in the liner which will thereby limit the amount of deflation caused by the puncture. The insert liner is moulded to accommodate the shape of the inner tube when inflated. Use of the insert liner of the present invention in combination with a conventional inner tube of reduced diameter has the additional advantage of being able to compensate for any pressure loss in the insert liner due to gas migration or punctures by increasing the pressure in the inner tube.

The insert of the present invention may also be used with tubeless tyres. Said insert may be bonded to the interior of the tyre over the tyre tread area and the side walls by means of a suitable bonding agent, or may be held in place against said interior surface over the tyre tread area and the side walls by the pressure within the tubeless tyres. The inserts are manufactured to have sufficient depth so that when the tyre is punctured, the puncture will not reach the tubeless area, but will be limited to a few spheres in the liner which will thereby limit the amount of deflation caused by the puncture. Loss of pressure in the insert due to gas migration or punctures can be compensated for by increasing the pressure within the tyre.

Whilst, in the above description a tyre has had a unitary insert embodying the invention fitted within it, it will be appreciated that a tyre may be provided with a multi-part insert arrangement, comprising two or more insert parts which, for example, fit together within the tyre to provide the assembled insert arrangement. In particular, the insert arrangement may comprise a plurality of similar or identical sectors which are fitted together, end to end, around the internal circumference of the tyre. References to a tyre insert above are also intended to extend to such multi-part insert arrangements.

The present invention is described in terms of elastomeric, hollow, thin-walled spheres under pressure. While the spherical configuration is preferred, the invention is not limited thereto, but contemplates pressurised, elastomeric, hollow, thin-walled shapes of any configuration or shape, which may, upon routine testing, be found to be suitable for use with the present invention.

The features disclosed in the foregoing description, in the following claims and/or in the accompanying drawings may, both separately and in any combination thereof, be material for realising the invention in diverse forms thereof.

**Claims**

1. A cellular tyre insert comprising:
(a) a multiplicity of preconstructed, hollow, flexible, cells;
(b) said preconstructed, hollow, flexible, cells further enclosing a gas within the cell under a pressure above that of atmospheric;
(c) said multiplicity of preconstructed, hollow, flexible, pressurised, cells being compressed together to condense the initial volume of said cells so that at least some of said cells become deformed and portions of some of the cells are pushed into the void space between adjacent cells to thereby substantially reduce the void space between said cells;
(d) said multiplicity of cells being bonded together in said compressed together state while in a mould to create a cellular structure conformal to the shape of the interior surface of a pneumatic tyre;
(e) said cellular structure having no substantial mass between cells; and
(f) upon completion of said bonding and the subsequent removal of said cellular structure from said mould, and thus said cellular structure no longer being constrained, said cellular structure remains in said compressed together state and approximately in said desired shape.

2. A tyre insert according to claim 1 wherein said cells or the outer surface of said tyre insert are coated or impregnated with a gas impermeable barrier to prevent or reduce the migration of pressurised gas out of said cells or said tyre insert.

3. The combination of a tyre insert as defined in claim 1 or claim 2 with a conventional pneumatic tyre and a conventional inner tube wherein said cellular tyre insert contacts the interior surface of said tyre adjacent to said tyre's tread and sidewalls and said inner tube contacts said cellular tyre insert.

4. The combination of a cellular tyre insert according to claim 3 with a tyre, wherein said tyre insert is bonded to the interior surface of said pneumatic tyre and to adjacent inserts if a multiplicity of said inserts are used to provide a hermetic seal, whereby the use of said inner tube is optional.

5. A relatively flat-proof tyre comprised of a pneumatic tyre and one or more tyre inserts as set forth in claim 1 or claim 2.

6. A construction component, for incorporation into a cellular tyre insert, said component being formed of a flexible material and having been produced in its entirety in a single moulding operation as a seamless one-piece structure that comprises an independent external surface and an independent internal surface which defines one complete, independent cell wall therebetween, enclosing a single hollow centre filled with gas under a pressure above that of atmospheric.

7. An apparatus for the moulding of elastomeric spheres from a resin or plastic by simultaneously rotating a mould for said sphere about two perpendicular axes of said sphere, said apparatus comprising:

a bracket (12) rotatably mounted within a frame (10), said bracket being rotatable about the axis of a pair of shafts (14a, 14b) passing through said frame and connected to said bracket;

a sphere mould (24) rotatably mounted to said bracket for rotation about an axis of said mould, said mould axis being perpendicular to the axis of said bracket shafts; and

power transmission means (20, 22a, 22b) to simultaneously rotate said bracket and mould as aforesaid, when either said bracket or said mould is rotated.

8. An apparatus for moulding elastomeric spheres from a resin or a plastic by simultaneously rotating a mould for said spheres through axes which are vertical and horizontal with respect to one another, said apparatus comprising:

a frame (10) having first (10a) and second (10b) upstanding legs;

a rotatable U-shaped bracket (12) rotatable within said frame and having a first leg 12a parallel to and spaced away from said first upstanding frame leg (10a), a second leg (12b) parallel to and spaced away from said second upstanding frame leg (10b), and a horizontal leg (12c) connecting said first and second bracket legs;

a first shaft (14a) passing through said first legs of the frame and bracket, and a second shaft (16a) passing through said second legs of the frame and bracket, said shafts being fixed to said bracket legs, and rotational within said frame legs to permit said bracket to be rotational about the horizontal axis of said shafts;

a sphere mould (24) rotatably attached to said horizontal bracket (12c) and having a shaft (26) projecting away from said mould to engage a drive chain (40) for rotating said mould about the vertical axis thereof, said mould having a mould cavity (24c), a gas valve (32) and a passageway (24d), said passageway communicating with said gas valve and mould cavity to provide a means for the pressurisation of said mould cavity, and power transmission means to simultaneously rotate said bracket (12) and mould (24) as aforesaid, when either said bracket or said mould is rotated.

9. A process for the construction of a syntactic foam tyre insert or a segment thereof, by first producing seamless, one-piece, flexible, hollow, pressurised cells, in the form of spheres, said process comprising:

(a) charging a spherical mould cavity (24c) with a desired quantity of a castable resin that will be flexible when cured;

(b) sealing said mould cavity;

(c) pressurizing said mould cavity to a desired pressure with a desired gas;

(d) rotating said mould about two perpendicular axes simultaneously to cause said castable resin within said mould cavity to coat the entire surface of said spherical mould cavity;

(e) upon said curing of the resin, opening said mould and removing the cell, and

(f) subsequently placing a multiplicity of said cells in a tyre insert mould;

(g) this volume of cells being then compressed into the tyre insert mould to substantially eliminate the void spaces between the cells;

(h) the cells being then bonded together in this compressed state, forming a unitary mass; and

(i) the tyre insert mould being then opened to release the formed syntactic foam tyre insert.

10. The process of claim 9 wherein said gas is selected so that its rate of migration through said pressurised cell wall is relatively low and wherein said cell or the outer surface of said syntactic foam tyre inserts are coated or impregnated with a gas impermeable barrier to prevent or reduce the migration of pressurised gas out of said cells.

**Patentansprüche**

1. Zellenförmige Reifeneinlage gekennzeichnet durch:

(a) eine Vielzahl von vorgefertigten, hohlen, flexiblen Zellen; wobei

(b) besagte vorgefertigte, hohle, flexbile Zellen ferner ein Gas unter einem Druck über Atmosphärendruck in der Zelle einschließen;

(c) besagte Vielzahl von vorgefertigten, hohlen, flexiblen, unter inneren Überdruck stehende Zellen zusammengedrückt werden, um das anfängliche Volumen besagter Zellen zu komprimieren, so daß wenigstens einige besagter Zellen sich verformen und Teile von einigen der Zellen in den leeren Raum zwischen benachbarten Zellen gedrückt werden, um dadurch den leeren Raum zwischen besagten Zellen wesentlich zu verringern;

(d) besagte Veilzahl von Zellen in besagtem zusammengedrückten Zustand miteinander verbunden wird, während sie sich in einer Form befindet, um eine zellenförmige Struktur zu schaffen, die mit der Form der Innenfläche eines Luftreifens übereinstimmt;

(e) besagte zellenförmige Struktur keine wesentliche Masse zwischen den Zellen aufweist; und

(f) nachdem besagte Verbindung vollendet und besagte zellenförmige Struktur anschließend aus besagter Form entfernt, und besagte zellenförmige Struktur somit nicht länger eingezwängt ist, besagte zellenförmige Struktur in besagtem zusammengedrückten Zustand und annähernd in besagter gewünschter Form bleibt.

2. Reifeneinlage nach Anspruch 1, dadurch gekennzeichnet, daß besagte Zellen oder die Außenfläche besagter Reinfeneinlage mit einer gasundurchlässigen Sperrschicht beschichtet oder imprägniert wird, um das Herauswandern von unter Druck stehendem Gas aus besagten Zellen oder besagter Reifeneinlage zu verhindern oder zu verringern.

3. Kombination einer Reifeneinlage nach Anspruch 1 oder Anspruch 2 mit einem herkömmlichen Luftreifen und einem herkömmlichen Luftschlauch, dadurch gekennzeichnet, daß besagte zellenförmige Reifeneinlage an der Innenfläche besagten Reifens benachbart zur Lauffläche und zu den Seitenwänden besagten Reifens anliegt und besagter Luftschlauch an besagter zellenförmiger Reifeneinlage anliegt.

4. Kombination einer zellenförmigen Reifeneinlage nach Anspruch 3 mit einem Reifen, dadurch gekennzeichnet, daß besagte Reifeneinlage mit der Innenfläche besagten Luftreifens und mit benachbarten Einlagen verbunden ist, wenn eine Vielzahl von besagten Einlagen verwendet wird, um eine hermetische Abdichtung zur Verfügung zu stellen, womit die Verwendung von besagtem Luftschlauch fakultativ ist.

5. Relativ plattensicherer Reifen, der aus einem Luftschlauch und einer oder mehreren Reifeneinlagen nach Anspruch 1 oder Anspruch 2 besteht.

6. Konstruktionsbestandteil zum Einbau in eine zellenförmige Reifeneinlage, dadurch gekennzeichnet, daß besagter Bestandteil aus einem flexiblen Material besteht und in seiner Gesamtheit in einem einzigen Formvorgang als eine nahtlose einstückige Struktur hergestellt worden ist, die eine unabhängige Außenfläche und eine unabhängige Innenfläche umfaßt, die eine vollständige unabhängige Zellwand dazwischen festlegt, die ein einziges hohles Zentrum umschließt, das mit einem Gas unter einem Druck über Atmosphärendruck gefüllt ist.

7. Verfahren zum Formen von elastomeren Kugeln aus einem Harz oder Kunststoff durch gleichzeitiges Drehen einer Form für besagte Kugel um zwei senkrechte Achsen besagter Kugel, wobei besagte Vorrichtung folgendes umfaßt:

einen Halter (12), der drehbar in einem Rahmen (10) angebracht ist, wobei besagter Halter um die Achse eines Wellenpaares (14a, 14b) drehbar ist, das durch besagten Rahmen hindurchgeht und mit besagtem Halter verbunden ist;

eine Kugelform (24), die zur Drehung um eine Achse besagter Form drehbar an besagtem Halter angebracht ist, wobei besagte Formachse senkrecht zur Achse besagter Halterwellen liegt; und

Kraftübertragungsmittel (20, 22a, 22b), um besagten Halter und besagte Form wie oben erwähnt gleichzeitig zu drehen, wenn entweder besagter Halter oder besagte Form gedreht wird.

8. Vorrichtung zum Formen elastomerer Kugeln aus einem Harz oder einem Kunststoff durch gleichzeitiges Drehen einer Form für besagte Kugeln um Achsen, die bezogen aufeinander vertikal und horizontal liegen, wobei besagte Vorrichtung folgendes umfaßt;

einen Rahmen (10) mit ersten (10a) und zweiten (10b) aufrechtstehenden Schenkeln;

einen drehbaren U-förmigen Halter (12), der in besagtem Rahmen drehbar ist und einen ersten Schenkel (12a), der parallel zu besagtem ersten aufrechtstehenden Rahmenschenkel (10a) und mit Abstand von diesem verläuft, einen zweiten Schenkel (12b), der parallel zu besagtem zweiten aufrechtstehenden Rahmenschenkel (10b) und mit Abstand von diesem verläuft, und einen horizontalen Schenkel (12c), der besagte erste und zweite Halterschenkel verbindet, besitzt;

eine erste Welle (14a), die durch besagte erste Schenkel des Rahmens und des Halters hindurchverläuft, und eine zweite Welle (16a), die durch besagte zweite Schenkel des Rahmens und des Halters hindurchverläuft, wobei besagte Wellen an besagten Halterschenkeln befestigt und in besagten Rahmenschenkeln rotierend sind, um es zu ermöglichen, daß besagter Halter um die horizontale Achse besagter Wellen rotierend ist;

eine Kugelform (24), die drehbar an besagtem horizontalen Halter (12c) befestigt ist und eine Welle (26) aufweist, die aus besagter Form heraussteht, um mit einer Antriebskette (40) zum Drehen besagter Form um die vertikale Achse derselben in Eingriff zu kommen, wobei besagte Form einen Formhohlraum (24c), ein Gasventil (32) und einen Verbindungskanal (24d) besitzt, wobei besagter Verbindungskanal mit besagtem Gasventil und besagtem Formhohlraum in Verbindung steht, um ein Mittel für das Unterdrucksetzen besagten Formhohlraums zur Verfügung zu stellen, und

Kraftübertragungsmittel, um besagten Halter (12) und besagte Form (24) wie oben erwähnt gleichzeitig zu drehen, wenn entweder besagter Halter oder besagte Form gedreht wird.

9. Verfahren für die Herstellung einer Reifeneinlage aus syntaktischen Schaum oder eines Segments derselben, in dem zunächst nahtlose, einstückige, flexible, hohle, unter innerem Überdruck stehende Zellen, in Form von Kugeln, hergestellt werden, wobei besagtes Verfahren folgende Schritte umfaßt:

(a) Beschicken eines kugelförmigen Formhohlraums (24c) mit einer gewünschten Menge eines gießbaren Harzes, das nach dem Aushärten flexibel ist;

(b) dichtes Verschließen besagten Formhohlraums;

(c) Unterdrucksetzen besagten Formhohlraums bis zu einem gewünschten Druck mit einem gewünschten Gas;

(d) Drehen besagter Form gleichzeitig um zwei senkrechte Achsen, um zu bewirken, daß besag-

tes gießbares Harz in besagtem Formhohlraum die gesamte Oberfläche besagten kugelförmigen Formhohlraums überzieht;

(e) nach besagtem Aushärten des Harzes Öffnen besagter Form und Entfernen der Zelle; und

(f) darauffolgend Hineingeben einer Vielzahl besagter Zellen in eine Reifeneinlageform; wobei

(g) dieses Volumen von Zellen dann in die Reifeneinlageform hinein zusammengepreßt wird, um die leeren Räumen zwischen den Zellen im wesentlichen zu eliminieren;

(h) die Zellen dann in diesem zusammengepreßten Zustand miteinander verbunden werden, wodurch sie einen einheitliche Masse bilden; und (i) die Reifeneinlageform dann geöffnet wird, um die geformte Reifeneinlage aus syntaktischen Schaum freizugeben.

10. Verfahren nach Anspruch 9, dadurch gekennzeichnet, daß besagtes Gas so ausgewählt wird, daß seine Wanderungsgeschwindigkeit durch besagte Wand der unter innerem Überdruck stehenden Zelle relativ niedrig ist und daß besagte Zelle oder die Außenfläche besagter Reifeneinlagen aus syntaktischen Schaum mit einer gasundurchlässigen Sperrschicht beschicht oder imprägniert wird, um das Herauswandern von unter Druck stehendem Gas aus besagten Zellen zu verhindern oder zu verringern.

## Revendications

1. Insert cellulaire pour pneumatiques comprenant:

(a) une multiplicité de cellules préconstruites, creuses et souples;

(b) ces cellules préconstruites, creuses et souples renfermant un gaz à une pression située au-dessus de la pression atmosphérique;

(c) cette multiplicité de cellules préconstruites, creuses et souples, sous pression, étant comprimées conjointement pour en condenser le volume initial de façon qu'au moins certaines de ces cellules soient déformées et des portions de celles-ci soient repoussées dans l'espace vide entre des cellules continguës, permettant ainsi de réduire sensiblement l'espace vide entre les cellules;

(d) cette multiplicité de cellules étant soudées ensemble à l'état comprimé dans un moule pour créer une structure cellulaire épousant la forme de la surface intérieure d'un pneumatique;

(e) cette structure cellulaire ne comportant aucune masse importante entre les différentes cellules; et

(f) à l'achèvement du soudage et après avoir extrait la structure cellulaire du moule, et qu'ainsi cette structure cellulaire n'est plus contrainte, celle-ci demeure à l'état comprimé et sensiblement dans la forme souhaitée.

2. Insert pour pneumatique selon la revendication 1, dans lequel les cellules ou la surface extérieure de l'insert pour pneumatiques sont revêtues ou imprégnées d'une barrière imperméable aus gaz pour empêcher ou réduire la migration du gaz sous pression hors des cellules ou de l'insert pour pneumatique.

3. Combinaison d'un insert pour pneumatiques tel que défini dans la revendication 1 ou la revendication 2, avec un pneumatique classique et une chambre à air classique, dans laquelle l'insert cellulaire pour pneumatiques vient en contact avec la surface intérieure du pneumatique contiguë à la bande de roulement et eux flancs, et la chambre à air intérieure vient en contact avec l'insert cellulaire pour pneumatiques.

4. Combinaison d'un insert cellulaire pour pneumatique selon la revendication 3, avec un pneumatique, dans lequel l'insert pour pneumatiques est soudé sur la surface intérieure de ce pneumatique et sur des inserts contigus si l'on utilise une multiplicité d'inserts de ce type pour fournir un joint hermétique, de telle sorte que l'utilisation d'une chambre à air devient facultative.

5. Pneumatique relativement résistant aux crevaisons constitué par un pneu et un ou plusieurs inserts pour pneumatique comme cela est indiqué dans la revendication 1 ou la revendication 2.

6. Composant de construction, destiné à être incorporé dans un insert cellulaire pour pneumatiques, ce composant étant constitué d'un matériau souple ayant été produit dans sa totalité en une seule opération de moulage sous forme de structure monobloc sans soudure qui comprend une surface extérieure indépendante et une surface intérieure indépendante qui définit une paroi de cellule complète, indépendante entre celle-ci, comportant une partie centrale unique remplie de gaz à une pression située au-dessus de la pression atmosphérique.

7. Appareil destiné au moulage de sphères en élastomère à partir d'une résine ou d'un plastique en faisant tourner simultanément un moule pour cette sphère autour de deux axes perpendiculaires de cette sphère, l'appareil comprenant:

un support (12) monté de façon rotative à l'intérieur d'un châssis (10), ce support pouvant tourner autour de l'axe d'une paire d'arbres (14a, 14b) traversant ce châssis et relié à ce support;

un moule de sphères (24) monté de façon rotative sur ce support pour la rotation autour d'un axe du moule, cet axe de moule étant perpendiculaire à l'axe des arbres de support; et

des moyens de transmission de puissance (20, 22a, 22b) pour faire tourner simultanément le support et le moule comme indiqué ci-dessus, lorsque soit le support soit le moule est en rotation.

8. Appareil destiné à mouler des sphères en élastomère à partir d'une résine ou d'un plastique en faisant tourner simultanément un moule pour ces sphères par des axes qui sont verticaux et horizontaux l'un par rapport à l'autre, l'appareil comprenant:

un châssis (10) comportant des premiers (10a) et seconds (10b) pieds érigés;

un support rotatif en forme de U (12) pouvant tourner à l'intérieur du châssis et comportant un premier pied (12a) parallèle à, et espacé à une certaine distance du premier pied érigé de châssis (10a), un second pied (12b) parallèle à et espacé à une certaine distance du second pied de châssis érigé (10b), et un pied horizontal (12c) reliant les premier et second pieds de support;

un premier arbre (14a) traversant les premiers pieds du châssis et du support, et un second arbre (16a) traversant les seconds pieds du châssis et du support, ces arbres étant fixés sur les pieds du support, et rotatifs à l'intérieur des pieds de châssis pour permettre à ce support d'être rotatif autour de l'axe horizontal de ces arbres;

un moule pour sphères (24) fixé de façon à pourvoir être mis en rotation sur le support horizontal (12c) et comportant un arbre (26) faisant saillie en éloignement du moule pour s'engrener dans une chaîne d'entraînement (40) pour la mise en rotation du moule autour de son axe vertical, de moule présentant une cavité (24c), une soupape de gaz (32) et un passage (24d), ce passage communiquant avec la soupape de gaz et la cavité de moule pour fournir un moyen de mise sous pression de la cavité du moule, et

des moyens de transmission pour mettre simultanément en rotation le support (12) et le moule (24) comme cela a été indiqué ci-dessus, lorsque soit le support soit le moule est mis en rotation.

9. Procédé pour la construction d'un insert pour pneumatiques en mousse syntactique ou un segment de celui-ci, en produisant d'abord des cellules sans couture, d'une pièce, souple, creuse, sous pression sous la forme de sphères, ce procédé comprenant les opérations consistant à:

(a) remplir une cavité du moule sphérique (24c) de la quantité souhaitée d'une résine coulable qui sera souple à l'état cuit;

(b) rendre étanche cette cavité de moule;

(c) mettre cette cavité du moule sous une pression souhaitée avec un gaz souhaité;

(d) mettre ce moule en rotation autour de deux axes perpendiculaires simultanément pour faire en sorte que la résine coulable à l'intérieur de la cavité de moule vienne revêtir toute la surface de la cavité de moule sphérique;

(e) lors de la cuisson de la résine, ouvrir le moule et enlever la cellule, et

(f) subséquemment, placer une multiplicité de cellules dans un moule d'inserts pour pneumatique;

(g) ce volume de cellule étant alors comprimé dans le moule d'inserts pour pneumatiques afin de supprimer sensiblement les espaces vides entre les cellules;

(h) les cellules étant alors soudées ensemble dans cet état comprimé, formant une masse unitaire; et

(i) le moule d'inserts pour pneumatiques étant alors ouvert pour libérer l'insert pour pneumatiques en mousse syntactique formé.

10. Procédé de la revendication 9 dans lequel le gaz est sélectionné de façon que sa vitesse de migration à travers la paroi de la cellule sous pression soit relativement faible et dans lequel la cellule ou la surface extérieure des inserts pour pneumatiques en mousse syntactique soit revêtue ou imprégnée d'une barrière imperméable aux gaz pour éviter ou réduire la migration du gaz sous pression hors de ces cellules.

Fig. 1

EP 0 193 913 B1